# DEMANDE DE BREVET EUROPEEN

(11) **EP 1 221 678 A1**
(43) Date de publication de la demande: **10.07.2002**
(21) Numéro de dépôt: 01810019.8
(22) Date de dépôt: 09.01.2001
(51) Int. Cl.: G07C 9/00, G01S 13/02

(54) **Récepteur destiné à capter un signal électromagnétique et dispositif utilisant un tel récepteur**

(71) Demandeur: Telectronic SA, 2300 La Chaux-de-Fonds (CH)
(72) Inventeur: Poliak, Juraj, 1012 Lausanne (CH); Gramiger, Jean, 1006 Lausanne (CH); Nicati, Pierre-Alain, 2013 Colombier (CH); Ganyi, Tibor, 6330 Cham (CH)
(74) Mandataire: Gresset, Jean

(57) **Abrégé**

L'invention concerne un récepteur destiné à capter un signal électromagnétique, comportant:
- une antenne réceptrice passive (22),
- un circuit résonnant (23) connecté à l'antenne, formé de composants passifs et répondant, par l'émission d'un signal électrique, au signal électromagnétique capté, et
- un circuit de traitement (25) du signal électrique.

Ce récepteur comporte, en outre, un circuit comparateur de seuil (24) définissant un seuil de référence et branché directement aux bornes du circuit résonnant (23) pour comparer le signal électrique, non amplifié, au seuil de référence et activer ledit circuit de traitement (25) seulement lorsque l'amplitude du signal électrique est supérieure au seuil.

L'invention concerne également un dispositif pour le suivi d'objets, faisant appel au récepteur décrit ci-dessus.

## Description

La présente invention concerne un récepteur destiné à capter un signal électromagnétique issu d'un émetteur. Elle concerne également un dispositif pour le suivi d'objets, incorporant un tel récepteur.

Dans l'état actuel de la technique, ces récepteurs comportent généralement:
- une antenne réceptrice passive,
- un circuit résonnant connecté à l'antenne, formé de composants passifs et répondant, par l'émission d'un signal électrique, au signal électromagnétique capté, et
- un circuit de traitement du signal électrique.

Lorsque de tels récepteurs sont portés par une personne et qu'ils doivent être en permanence sur écoute, la source d'énergie électrique qui les alimente doit être assez volumineuse, faute de quoi elle risque d'être rapidement épuisée car les circuits de traitement connus consomment beaucoup d'énergie. La miniaturisation de ces récepteurs ne peut donc se faire qu'au prix de la réduction de leur autonomie.

Le but de la présente invention est de pallier cet inconvénient. Il est atteint grâce au fait que le récepteur selon l'invention, tel que présenté ci-dessus, comporte un circuit comparateur de seuil, définissant un seuil de référence et branché directement aux bornes du circuit résonnant pour comparer le signal électrique, non amplifié, au seuil de référence et activer le circuit de traitement seulement lorsque l'amplitude du signal est supérieure à ce seuil.

Il est particulièrement avantageux que le signal électromagnétique présente une fréquence comprise entre 1kHz et 1MHz et que la fréquence propre du circuit résonnant, formé d'un condensateur et d'une bobine branchés en parallèles, soit en accord avec la fréquence de ce signal

La présente invention trouve une application particulièrement intéressante dans des dispositifs permettant le suivi d'objets, mobiles dans un espace donné, notamment pour la surveillance de personnes dans un home ou un hôpital. Dans ce cas, il est indispensable que l'objet puisse être porté sans entraver la personne qui en dispose et que la durée de vie de l'ensemble soit aussi longue que possible.

A cet effet, le dispositif de suivi d'objets selon l'invention comporte:
- un ensemble d'émetteurs RF de balise, répartis dans l'espace considéré et agencés pour émettre chacun un signal électromagnétique porteur d'un code d'identification de balise qui lui est propre;
- lié à chacun de ces objets, un module émetteur-récepteur RF comportant:
   . un récepteur RF de balise pour capter le signal électromagnétique émis par la balise dont il est le plus proche et comportant une antenne réceptrice passive, un circuit résonnant connecté à l'antenne, formé de composants passifs et répondant, par l'émission d'un signal électrique, au signal électromagnétique capté, et un circuit comparateur de seuil définissant un seuil de référence et branché directement aux bornes du circuit résonnant pour comparer le signal électrique, non amplifié, au seuil de référence et délivrer un signal d'activation lorsque l'amplitude du signal électrique est supérieure au seuil, ce qui indique que l'objet se trouve au voisinage d'une balise;
   . un circuit de traitement contenant, en mémoire, un code d'identification de l'objet et répondant au signal d'activation par la mise en mémoire du code de la balise au voisinage de laquelle l'objet se trouve; et
   . un émetteur RF d'identification pour émettre un signal porteur du code d'identification de l'objet et du code d'identification de la balise mémorisé;
- au moins un récepteur RF d'identification pour recevoir les signaux émis par les émetteurs d'identification liés aux objets; et
- une station de base pour le traitement des informations reçues par le récepteur d'identification.

De façon avantageuse, chaque émetteur d'identification comprend, en outre, des moyens pour déclencher l'émission de son signal porteur soit à la demande de la personne portant l'objet, soit automatiquement chaque fois que le contenu de la mémoire est modifié.

Dans certaines applications, par exemple lorsque l'antenne de l'émetteur RF de balise doit se trouver loin d'une source d'énergie, lorsqu'elle se trouve dans un espace ouvert, ou encore lorsque deux d'entre elles sont proches l'une de l'autre, il est intéressant que le dispositif soit équipé d'un émetteur RF de balise qui comporte un circuit résonnant comprenant:
- une bobine munie de deux extrémités dont l'une est reliée à une terre,
- un condensateur formé d'une plaque conductrice disposée sur le sol dans une zone de l'espace considéré et de ladite terre, et
- un fil conducteur unique reliant ladite plaque à l'autre extrémité de la bobine.

D'autres caractéristiques de l'invention ressortiront de la description qui va suivre, faite en regard du dessin annexé, dans lequel:
- la figure 1 représente, de manière schématique, un dispositif selon l'invention;
- la figure 2 montre le schéma électronique d'un module émetteur-récepteur RF, partie du dispositif de la figure 1 et destiné à équiper un objet à suivre; et
- la figure 3 est un schéma d'antenne susceptible d'équiper le dispositif de la figure 1.

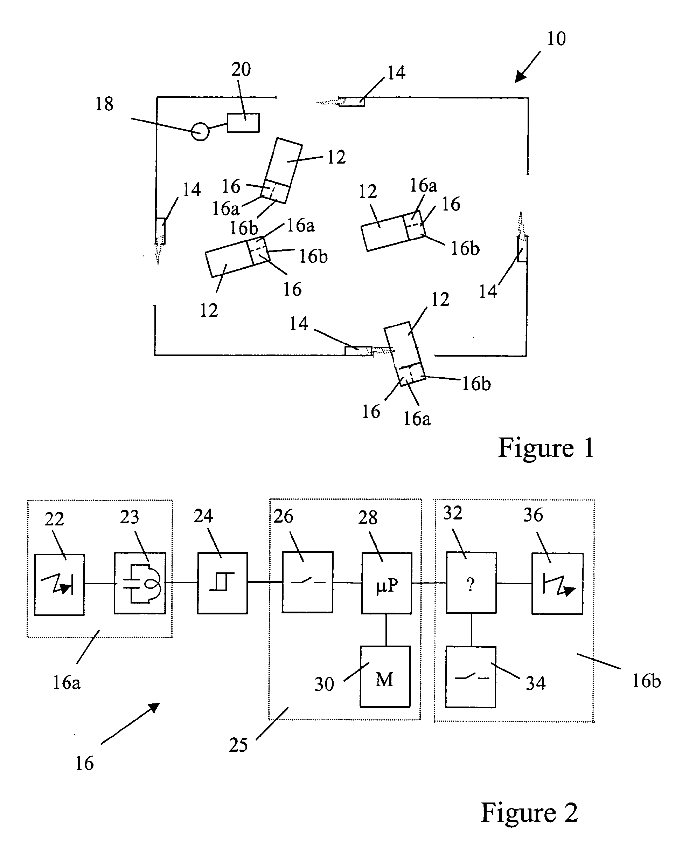

Le dispositif représenté à la figure 1 est destiné à suivre, dans un espace 10, le mouvement d'objets 12 mobiles susceptibles d'entrer dans cet espace ou d'en sortir. Il comprend:
- un ensemble d'émetteurs RF 14 servant de balise dans l'espace 10 et émettant chacun un signal qui lui est propre, sur une porteuse à basse fréquence, par exemple 75 kHz;
- un ensemble de modules émetteurs-récepteurs RF 16, chacun associé à l'un des objets 12 et comprenant un récepteur RF de balise 16a agencé pour recevoir et traiter les signaux provenant des émetteurs RF de balise 14 et un émetteur RF d'identification 16b pour émettre un signal modulant une porteuse de plus haute fréquence, par exemple 434,01 MHz;
- un récepteur RF d'identification 18 agencé pour capter les signaux émis par les émetteurs d'identification 16b; et
- une station de base 20 pour le traitement des informations captées par le récepteur d'identification 18.

L'espace 10 peut être clos, avec des portes d'accès, comme l'est, par exemple, un hôpital ou un home pour personnes âgées. Il peut aussi s'agir d'un espace structuré, tel qu'un jardin avec des avenues qui définissent les lieux de passages.

Les objets 12 sont destinés à être portés par des personnes susceptibles de se déplacer dans l'espace 10 et qui risquent de s'y égarer ou de s'en échapper, comme c'est le cas pour certaines personnes âgées ou malades.

Les émetteurs RF de balise 14 sont disposés tout autour de l'espace 10, sur ses parois, ses portes ou ses lieux de passage, de manière à ce que tout objet 12, porté par une personne qui s'y déplace, puisse recevoir le signal émis par l'une des balises.

L'émetteur RF d'identification 16b émet un signal automatiquement lors de son passage à proximité d'un émetteur RF de balise 14 et/ou à la demande de la personne qui porte l'objet 12. Ce signal RF est porteur de deux informations, soit le code d'identification du dernier lieu de passage reçu de l'émetteur RF de balise 14 et le code d'identification de l'objet 12 lui-même.

Le signal émis par l'émetteur RF d'identification 16b est capté par le récepteur RF d'identification 18 qui le transmet à la station de base 20, laquelle peut ainsi connaître le dernier endroit fréquenté dans l'espace 10 par la personne porteuse de l'objet 12.

Lorsque l'émetteur RF d'identification 16b émet automatiquement un signal lors du passage près de l'un des émetteurs 14, il est possible de savoir, de manière immédiate, quand la personne porteuse d'un objet 12 quitte l'espace 10.

En variante, l'objet 12 peut être muni d'un dispositif de commande susceptible d'être activé manuellement. C'est alors seulement lorsque la personne qui le porte souhaite de l'aide que l'émetteur RF d'identification 16b est mis en action. La station de base 20 est ainsi directement informée que la personne porteuse de l'objet émettant appelle à l'aide et qu'elle se trouve dans une région immédiatement identifiée par la connaissance de la dernière balise 14 rencontrée. Il est évident que les deux solutions peuvent être combinées.

L'antenne des émetteurs 14 est formée d'une bobine avec ou sans noyau ferromagnétique. La variante avec noyau est bien adaptée lorsque l'antenne doit être disposée à l'extérieur, au voisinage d'un chemin, par exemple. La variante sans noyau se prête mieux au cas où l'antenne doit être associée à une porte. Elle est formée alors d'un fil entourant la porte.

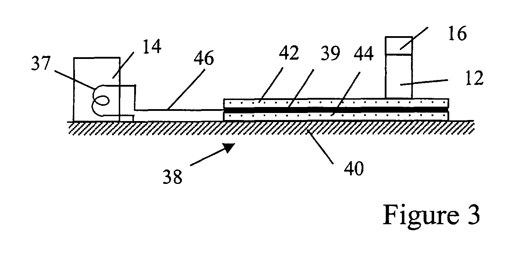

Dans l'un comme dans l'autre de ces cas, le couplage entre les émetteurs RF de balise 14 et les récepteurs RF de balise 16a se fait par induction. Il est également possible de le réaliser de manière capacitive, comme cela sera expliqué en référence à la figure 3.

L'alimentation des émetteurs 14 ne pose pas de problème particulier, dès lors qu'ils sont fixes. Lorsqu'ils se trouvent à l'intérieur d'un bâtiment, ils peuvent être branchés directement au réseau électrique. A l'extérieur, il est aussi possible d'utiliser une alimentation autonome, munie d'un accumulateur.

En revanche, l'alimentation des modules émetteurs-récepteurs 16 est beaucoup plus complexe. Il est, en effet, nécessaire qu'ils soient, non seulement, aussi légers et miniaturisés que possible, mais aussi qu'ils aient une grande autonomie. Cela implique qu'ils soient faibles consommateurs d'énergie.

L'émetteur 16b équipant les modules émetteurs-récepteurs 16 n'intervient que peu dans la consommation globale d'énergie, car il est mis à contribution seulement durant de courts instants, lors du passage au voisinage d'un émetteur 14 ou lorsque le dispositif de commande est activé.

Le récepteur RF 16a des modules émetteurs-récepteurs 16, par contre, doit être en permanence en situation d'écoute, car le passage au voisinage d'un émetteur 14 ne peut être prévu. Il est donc indispensable que sa consommation soit particulièrement faible. Le module émetteur-récepteur 16 représenté schématiquement sur la figure 2 permet de satisfaire cette exigence.

Comme on le voit sur cette figure, le récepteur RF 16a comprend une antenne réceptrice passive 22 destinée à capter les signaux électromagnétiques émis par les émetteurs 14 et un circuit résonnant 23 connecté à l'antenne 22, formé d'une bobine et d'un condensateur et répondant par l'émission d'un signal électrique au signal électromagnétique capté. Un circuit comparateur à seuil 24 est relié au circuit résonnant 23, de manière à ce que le signal électrique issu du circuit résonnant 23 lui soit appliqué, sans amplification. Le module émetteur-récepteur 16 comporte, en outre, un circuit de traitement 25, formé d'un circuit d'enclenchement 26 connecté à la sortie du comparateur 24, d'un microprocesseur 28 commandé par le circuit d'enclenchement 26 et d'une mémoire 30 associée au microprocesseur 28 et qui contient le code d'identification de l'objet en question et le code d'identification du dernier émetteur 14 rencontré.

L'émetteur RF d'identification 16b comprend un circuit d'interrogation 32, relié au microprocesseur 28, qui sert à commander l'interrogation de la mémoire 30, soit à la demande du porteur de l'objet en actionnant un interrupteur 34, soit automatiquement par le microprocesseur 28, à chaque fois que le contenu de la mémoire 30 est modifié, ainsi qu'un circuit émetteur 36. Ce dernier émet un signal électromagnétique d'identification, capté par le récepteur 18.

Le circuit résonnant 23 est accordé sur la fréquence du champ électromagnétique des émetteurs de balise 14. Lorsque celle-ci est de 75 kHz, la bobine comporte quelque 400 spires, ce qui correspond à une inductance d'environ 16 mH, alors que le condensateur a une capacité de 100 pF.

Le circuit comparateur à seuil 24 et le circuit d'enclenchement 26 sont avantageusement réunis dans un même circuit intégré, par exemple celui commercialisé par la firme Linear Technology (USA) sous la dénomination LTC1440. Un tel circuit, dont la consommation est inférieure à 10 A, compare, en permanence ou de manière périodique, les signaux reçus à une valeur de seuil préétablie.

Tant que cette valeur de seuil n'est pas atteinte, c'est-à-dire tant que l'objet 12 n'est pas à proximité d'un émetteur 14, le circuit d'enclenchement 26 maintient le microprocesseur 28 au repos.

Si, au contraire, la valeur de seuil est dépassée, ce qui se produit lorsque l'objet 12 passe au voisinage d'un émetteur 14, le circuit d'enclenchement 26 envoie un ordre d'activation au microprocesseur 28. Ce dernier analyse alors le signal reçu et stocke dans la mémoire 30 - qui contient déjà le code d'identification de l'objet 12 connu par la station de base 20 - le code de l'émetteur de balise 14 proche.

Lorsque le circuit d'interrogation 32 est activé, soit à l'aide de l'interrupteur 34, soit par le microprocesseur 28, l'émetteur RF d'identification 16a génère un signal porteur de l'information contenue dans la mémoire 30, soit le code de l'objet 12 et celui du dernier émetteur de balise 14 rencontré. Ce signal se présente sous une forme d'un train d'impulsions, représentant un message de 8 bits pour chaque information transmise. Il est, de la sorte, possible d'identifier 256 émetteurs de balise 14.

La figure 3 représente un émetteur de balise 14 particulier, dans lequel la fonction émettrice est assurée par un couplage capacitif. Plus précisément, l'émetteur 14 comporte un circuit résonnant comportant un bobinage 37 et un condensateur 38 comprenant deux électrodes dont l'une est constituée d'une plaque en matériau conducteur 39 et l'autre par une terre 40. La plaque 39 est prise entre deux couches isolantes 42 et 44 et disposée sur le sol. La plaque 39 est reliée au reste de l'émetteur de balise au moyen d'un fil conducteur unique 46.

La pratique a montré que les couches isolantes 42 et 44 pouvaient être respectivement constituées par le sol et les chaussures de la personne passant sur la plaque 39. En d'autres termes, la plaque en matériau conducteur 39 peut, sans autre, être disposée directement sur le sol.

Un émetteur de balise 14, tel que décrit en référence à la figure 3, peut assurer un couplage capacitif avec des récepteurs de balise 16a dans de bonnes conditions, même en plein air, la transmission d'informations de l'émetteur de balise 14 vers le récepteur 16a se faisant lorsque ce dernier passe sur la plaque 39. Les courants mis en oeuvre dans le fil conducteur 46 (quelques nA), ainsi que les tensions appliquées (quelques V) sont extrêmement faibles, de sorte que cette solution ne présente aucun risque et que les moyens mis en oeuvre sont peu coûteux. La portée de l'antenne se limite à la zone de passage au-dessus de la plaque 39, de sorte que deux émetteurs de balises 14 peuvent être très proches l'un de l'autre sans risque de confusion. En outre, les composants mis en jeu sont très robustes, de sorte qu'il est possible d'installer un tel émetteur de balise 14 à l'extérieur, sans mesure de protection particulière.

La plaque 39 peut avantageusement être faite en métal, par exemple en aluminium, afin d'éviter qu'elle ne s'oxyde. Elle pourrait également être réalisée au moyen d'une couche conductrice ou semi-conductrice déposée sur une couche isolante, par exemple du verre. Sa surface est avantageusement comprise entre 0,2 et 2 m².

Le message émis en direction de la station de base 20 peut avantageusement comporter des informations relatives aux trois derniers émetteurs-balises 14 rencontrés, ce qui permet de tracer le parcours suivi. Ce message peut être complété par des informations horaires relatives aux déplacements effectués. Dans ce cas, une base de temps doit être ajoutée aux modules émetteurs-récepteurs 16 ou aux émetteurs 14.

Le dispositif qui vient d'être décrit permet donc de savoir au voisinage de quelle balise se trouve la personne recherchée. Il n'est, par contre, pas possible de savoir dans quelle direction elle se dirigeait lors de son dernier passage. Pour pallier cet inconvénient, il peut être avantageux de disposer deux émetteurs 14 contigus, chacun associé à un signal spécifique. Il est, ainsi possible de savoir si la personne est, en dernier lieu, entrée ou sortie, selon que c'est le signal d'un émetteur ou de l'autre qui a été capté en dernier.

## Revendications

1. Récepteur (16a) destiné à capter un signal électromagnétique, comportant:
- une antenne réceptrice passive (22),
- un circuit résonnant (23) connecté à l'antenne, formé de composants passifs et répondant, par l'émission d'un signal électrique, au signal électromagnétique capté, et
- un circuit de traitement (25) dudit signal électrique,
**caractérisé en ce qu'**il comporte, en outre, un circuit comparateur de seuil (24) définissant un seuil de référence et branché directement aux bornes du circuit résonnant (23) pour comparer ledit signal électrique, non amplifié, audit seuil de référence et activer ledit circuit de traitement (25) seulement lorsque l'amplitude du signal électrique est supérieure au seuil.

2. Récepteur selon la revendication 1, **caractérisé en ce que** ledit signal électromagnétique a une fréquence comprise entre 1kHz et 1MHz et **en ce que** la fréquence propre du circuit résonnant, formé d'un condensateur et d'une bobine branchés en parallèles, est en accord avec la fréquence dudit signal électromagnétique.

3. Dispositif pour le suivi d'objets (12) susceptibles de se déplacer dans un espace donné (10), **caractérisé en ce qu'**il comporte:
- un ensemble d'émetteurs RF de balise (14), répartis dans ledit espace et agencés pour émettre chacun un signal électromagnétique porteur d'un code d'identification de balise qui lui est propre;
- lié à chacun desdits objets (12), un module émetteur-récepteur RF (16) comprenant:
. un récepteur RF de balise (16a) pour capter le signal électromagnétique émis par l'émetteur de balise (14) dont il est le plus proche et comportant une antenne réceptrice passive (22), un circuit résonnant (23) connecté à l'antenne, formé de composants passifs et répondant, par l'émission d'un signal électrique, au signal électromagnétique capté, et un circuit comparateur de seuil (24) définissant un seuil de référence et branché directement aux bornes du circuit résonnant (23) pour comparer ledit signal électrique, non amplifié, audit seuil de référence et délivrer un signal d'activation lorsque l'amplitude du signal électrique est supérieure au seuil, ce qui indique que l'objet se trouve au voisinage d'une balise;
. un circuit de traitement (25) contenant, en mémoire, un code d'identification de l'objet et répondant au signal d'activation par la mise en mémoire du code de ladite balise; et
. un émetteur RF d'identification (16b) pour émettre un signal porteur du code d'identification de l'objet et du code d'identification de la balise mémorisé;
- au moins un récepteur RF d'identification (18) pour recevoir les signaux émis par les émetteurs d'identification (16b) liés aux objets (12); et
- une station de base (20) pour le traitement des informations reçues par ledit récepteur d'identification (18).

4. Dispositif selon la revendication 3, **caractérisé en ce que** chaque émetteur d'identification (16b) comprend, en outre, des moyens (34) pour déclencher l'émission de son signal porteur à la demande de la personne portant l'objet.

5. Dispositif selon l'une des revendications 3 et 4, **caractérisé en ce que** chaque émetteur d'identification (16b) comprend, en outre, des moyens (34) pour déclencher l'émission de son signal porteur automatiquement chaque fois que le contenu en mémoire dans le circuit de traitement (25) est modifié.

6. Dispositif selon l'une des revendications 3 à 5, **caractérisé en ce qu'**au moins l'un desdits émetteurs RF de balise (14) comporte un circuit résonnant comprenant:
- une bobine munie de deux extrémités dont l'une est reliée à une terre (40),
- un condensateur (38) formé d'une plaque conductrice (39) disposée sur le sol dans une zone dudit espace (10) et de ladite terre (40), et
- un fil conducteur unique (46) reliant ladite plaque (39) à l'autre extrémité de la bobine.
